# EUROPEAN PATENT SPECIFICATION

(11) **EP 2 665 153 B1**
(45) Date of publication and mention of the grant of the patent: **29.06.2016**
(21) Application number: 13167499.6
(22) Date of filing: 13.05.2013
(51) Int. Cl.: H02J 7/02, H02J 5/00, H02J 7/04

(54) **Mobile terminal**
Mobiles Endgerät
Terminal mobile

(30) Priority: 17.05.2012 KR 20120052371
(43) Date of publication of application: 20.11.2013
(73) Proprietor: LG Electronics Inc., Yeongdeungpo-gu Seoul 150-721 (KR)
(72) Inventor: Han, Kiwon, Seoul 153-801 (KR); Chong, Kabsung, Seoul 153-801 (KR); Kim, Youngtae, Seoul 153-801 (KR); Lee, Joonbum, Seoul 153-801 (KR); Yi, Mizi, Seoul 153-801 (KR)
(74) Representative: Cabinet Plasseraud

(56) References cited:
- KR-A- 20050 024 168
- US-A1- 2010 213 895
- US-A1- 2011 053 500

## Description

### BACKGROUND

### Field

The present invention relates to wireless charging technology and, more particularly, to wireless charging technology for charging a battery at a high speed according to a magnetic induction method.

### Related Art

As the functions of a mobile terminal, such as a notebook, a mobile phone, and a smart phone, are diversified, the mobile terminal is being implemented in the form of a multimedia player equipped with complex functions, such as taking a photograph or capturing a moving image, playing music or a moving image file, playing a game, and receiving broadcasting.

In order to support and enhance the functions of the mobile terminal, the improvement of structural parts and/or software parts of the mobile terminal may be taken into consideration. As a variety of terminals including a mobile terminal are recently providing complex and various functions, a menu structure becomes complicated.

In particular, there are explosive interest and researches into technology for wirelessly charging a battery included in a mobile terminal. Examples and possible embodiment of the prior art may be found in US 2010/213895 A1 or US 2011/053500 A1 (cf. the preamble of claim 1).

### SUMMARY

An object of the present invention is described in relation of claim 1. Specific embodiments of the invention are described in claims 2-12.

A mobile terminal for wirelessly charging a battery embedded therein based on pick-up power from a wireless charging device may be provided.

Technical objects to be achieved by the present invention are not limited to the above-described objects and other technical objects that have not been described will be evidently understood by those skilled in the art from the following description.

### Brief Description of the Drawings

FIG. 1 is a block diagram of a mobile terminal in accordance with an embodiment of the present invention;
FIG. 2 is a diagram showing that the batteries of the mobile terminals can be charged wirelessly through a wireless charging device in accordance with an embodiment of the present invention;
FIG. 3 shows a user interface that allows a user to select battery charging mode, provided by the mobile terminal;
FIG. 4 shows a user interface that allows a user to change battery charging mode, provided by the mobile terminal in accordance with the present invention;
FIG. 5 shows a schematic construction of the mobile terminal and the wireless charging device in accordance with the present invention;
FIG. 6 is a flowchart illustrating an example of a method of charging a battery at a high speed which is performed in the mobile terminal in accordance with the present invention;
FIG. 7 is a circuit diagram showing an example of the power pick-up unit of the mobile terminal in accordance with the present invention;
FIGS. 8 and 9 show examples in which the inductance value of a magnetic induction coil is changed depending on the charging mode of a battery in the mobile terminal in accordance with the present invention;
FIG. 10 is a flowchart illustrating another example of a method of charging a battery at a high speed which is performed in the mobile terminal in accordance with the present invention;
FIG. 11 is a block diagram of the power pick-up unit of the mobile terminal in accordance with the present invention, for illustrating the method shown in FIG. 10;
FIG. 12 is a flowchart illustrating an example of a method of charging a battery included in another electronic device at a high speed which is performed in the wireless charging device in accordance with the present invention;
FIG. 13 is a block diagram showing an example of the power transmitter of the wireless charging device in accordance with the present invention; and
FIG. 14 is a circuit diagram showing an example of the power conversion unit of the wireless charging device in accordance with the present invention.

### Detailed Description of the Embodiments

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

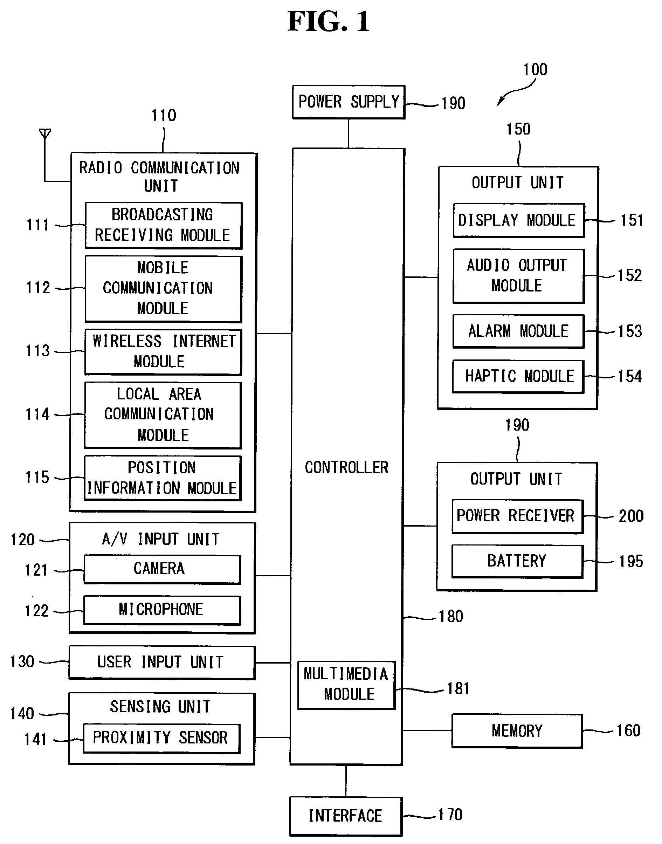

FIG. 1 is a block diagram of a mobile terminal 100 in accordance with an embodiment of the present invention. The mobile terminal 100 can include a radio communication unit 110, an audio/video (A/V) input unit 120, a user input unit 130, a sensing unit 140, an output unit 150, memory 160, an interface 170, a controller 180, and a power supply 190. The components shown in FIG. 1 are not essential parts and the number of components included in the mobile terminal can be varied.

The components of the mobile terminal will now be described.

The radio communication unit 110 can include at least one module that enables radio communication between the mobile terminal 100 and a radio communication system or between the mobile terminal 100 and a network in which the mobile terminal 100 is located. For example, the radio communication unit 110 can include a broadcasting receiving module 111, a mobile communication module 112, a wireless Internet module 113, a local area communication module 114 and a position information module 115.

The broadcasting receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

The broadcasting related information can be information on a broadcasting channel, a broadcasting program or a broadcasting service provider. The broadcasting related information can be provided even through a mobile communication network. In this case, the broadcasting related information can be received by the mobile communication module 112.

The broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcasting receiving module 111 receives broadcasting signals using various broadcasting systems. Particularly, the broadcasting receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcasting receiving module 111 can be constructed to be suited to broadcasting systems providing broadcasting signals other than the above-described digital broadcasting systems.

The broadcasting signals and/or broadcasting related information received through the broadcasting receiving module 111 can be stored in the memory 160. The mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 means a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The local area communication module 114 means a module for local area communication. Bluetooth, radio frequency identification (RFID), infrared data association

(IrDA), ultra wideband (UWB) and ZigBee can be used as a local area communication technique.

The position information module 115 confirms or obtains the position of the mobile terminal. A global positioning system (GPS) module is a representative example of the position information module 115. According to the current technology, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time.

Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display module 151.

The image frames processed by the camera 121 can be stored in the memory 160 or transmitted to an external device through the radio communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when the external audio signal is received.

The user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone. And the sensing unit 140 can sense a change of the position of the mobile terminal 100, a movement of the mobile terminal or a gesture of the user using a gesture detecting sensor 141. Furthermore, the sensing unit 140 can sense whether the power supply 190 supplies power and whether the interface 170 is connected to an external device. The sensing unit 140 can include a proximity sensor.

The output unit 150 generates visual, auditory or tactile output and can include the display module 151, an audio output module 152, an alarm module 153 and a haptic module 154.

The display module 151 displays information processed by the mobile terminal 100. For example, the display module 151 displays UI or graphic user interface (GUI) related to a telephone call when the mobile terminal is in the call mode. The display module 151 displays a captured or/and received image, UI or GUI when the mobile terminal 100 is in the video telephony mode or the photographing mode.

The display module 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display module 151 can also be of the light transmission type. According to this structure, a user can see an object located behind the body of the mobile terminal 100 through an area of the body of the mobile terminal 100, which is occupied by the display module 151.

The mobile terminal 100 can include at least two display modules 151 according to constitution of the terminal. For example, the mobile terminal 100 can include a plurality of displays that are arranged on a single face at a predetermined distance or integrated. Otherwise, the plurality of displays can be arranged on different sides.

In the case where the display module 151 and a sensor sensing touch (referred to as a touch sensor hereinafter) form a layered structure, which is referred to as a touch screen hereinafter, the display module 151 can be used as an input device in addition to an output device. The touch sensor can be in the form of a touch film, a touch sheet and a touch pad, for example.

The touch sensor can be constructed such that it converts a variation in pressure applied to a specific portion of the display module 151 or a variation in capacitance generated at a specific portion of the display module 151 into an electric input signal. The touch sensor can be constructed such that it can sense pressure of touch as well as the position and area of touch.

When touch input is applied to the touch sensor, a signal corresponding to the touch input is transmitted to a touch controller. The touch controller processes the signal and transmits data corresponding to the processed signal to the controller 180. Accordingly, the controller 180 can detect a touched portion of the display 151.

The touch sensor may be implemented using proximity sensor located in an internal region of the mobile terminal, surrounded by the touch screen, or near the touch screen. The proximity sensor senses an object approaching a predetermined sensing face or an object located near the proximity sensor using electromagnetic force or infrared rays without having mechanical contact. The proximity sensor has lifetime longer than that of a contact sensor and has wide application.

The proximity sensor includes a transmission type photo-electric sensor, a direct reflection type photo-electric sensor, a mirror reflection type photo-electric sensor, a highfrequency oscillating proximity sensor, a capacitive proximity sensor, a magnetic proximity sensor, an infrared proximity sensor, etc.

A capacitive touch screen is constructed such that proximity of a pointer is detected through a variation in an electric field according to the proximity of the pointer. In this case, the touch screen (touch sensor) can be classified as a proximity sensor.

For convenience of explanation, an action of approaching the pointer to the touch screen while the pointer it not being in contact with the touch screen such that location of the pointer on the touch screen is recognized is referred to as "proximity touch" and an action of bring the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

The proximity sensor senses proximity touch and a proximity touch pattern (for example, a proximity touch distance, a proximity touch direction, a proximity touch velocity, a proximity touch time, a proximity touch position, and a proximity touch moving state). Information corresponding to the sensed proximity touch action and proximity touch pattern can be displayed on the touch screen.

The audio output module 152 can output audio data received from the radio communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) that are performed in the mobile terminal 100. The audio output module 152 can include a receiver, a speaker, a buzzer, etc.

The alarm module 153 outputs a signal for indicating generation of an event of the mobile terminal 100. Examples of events generated in the mobile terminal include receiving of a call signal, receiving of a message, input of a key signal, input of touch, etc. The alarm module 153 can output signals in forms different from video signals or audio signals, for example, a signal for indicating generation of an event through vibration. The video signals or the audio signals can be also output through the display module 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to a constitution of the mobile terminal.

The memory 160 can store a program for the operation of the controller 180 and temporarily store input/output data (for example, phone book, messages, still images, and moving images). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

The interface 170 serves as a path to all external devices connected to the mobile terminal 100. The interface 170 receives data from the external devices or power and transmits the data or power to the internal components of the mobile terminal 100 or transmits data of the mobile terminal 100 to the external devices.

The interface 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a card slot included in the interface 170.

The controller 180 controls the overall operation of the mobile terminal. For example, the controller 180 performs control and processing for voice communication, data communication and video telephony. The controller 180 can include a multimedia module 181 for playing multimedia. The multimedia module 181 can be included in the controller 180 or separated from the controller 180.

The controller 180 can perform a pattern recognition process capable of recognizing handwriting input or picture-drawing input applied to the touch screen as characters or images.

The power supply 190 receives external power and internal power and provides power required for the operations of the components of the mobile terminal under the control of the controller 180.

The power supply 190 can receive power from a wireless charging device in accordance with a magnetic induction method and charge the battery 195 with the received power. The power supply 190 may charge the battery 195 in normal charging mode or in fast charging mode.

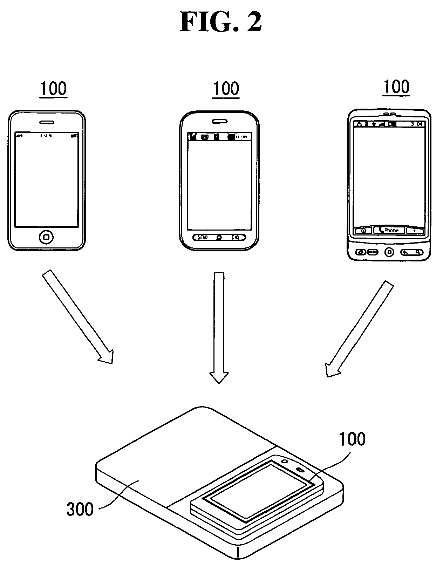

The power receiver 200 of the power supply 190 can generate a charging voltage for the battery 195 based on the pick-up power from the wireless charging device. The controller 180 can control the pick-up power from the wireless charging device by controlling the impedance of one or more elements, related to magnetic induction in the power receiver 200, depending on charging mode and control the charging speed of the battery 195 based on the controlled pick-up power. A charging operation on the battery 195 of the power supply 190 is described in detail later with reference to FIGS. 2 to 14.

Various embodiments of the inventive concept can be implemented in a computer or similar device readable recording medium using software, hardware or a combination thereof, for example.

According to hardware implementation, the embodiments of the inventive concept can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units for executing functions. In some cases, the embodiments can be implemented by the controller 180.

According to software implementation, embodiments such as procedures or functions can be implemented with a separate software module executing at least one function or operation. Software codes can be implemented according to a software application written in an appropriate software language. Furthermore, the software codes can be stored in the memory 160 and executed by the controller 180.

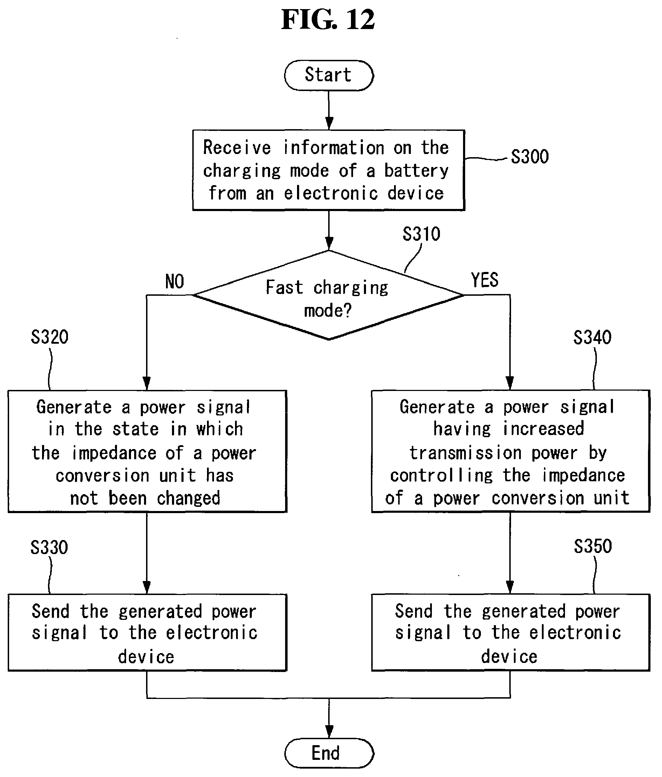

The construction of the mobile terminal 100 in accordance with the present invention has been described in detail above with reference to FIG. 1. The battery fast charging function of the mobile terminal 100 in accordance with the present invention is described in detail below with reference to FIGS. 2 to 11. Furthermore, a wireless charging device 300 capable of charging the battery of an electronic device included the mobile terminal 100 at a high speed in accordance with the present invention is described in detail below with reference to FIGS. 12 to 14.

FIG. 2 is a diagram showing that the batteries 195 of the mobile terminals 100 can be charged wirelessly through the wireless charging device 300 in accordance with an embodiment of the present invention. Referring to FIG. 2, when the mobile terminals 100 are disposed over the wireless charging device 300 having its charging function activated, the mobile terminals 100 can receive power from the wireless charging device 300 in accordance with a magnetic induction method and charge the batteries 195 with the received power.

When the mobile terminal 100 requests the battery 195 to be charged at a high speed, the wireless charging device 300 can increase the power transmitted to the mobile terminal 100. Meanwhile, the wireless charging device 300 may receive the request for the fast charging from the mobile terminal 100 based on wireless communication performed by the radio communication unit 110 of the mobile terminal 100 and may receive the request for the fast charging from the mobile terminal 100 based on wireless communication performed by the power receiver 200 included in the power supply 190 of the mobile terminal 100.

Even when the battery 195 needs to be charged at a high speed, the wireless charging device 300 can transmit the same power irrespective of the charging mode of the battery 195. Here, the mobile terminal 100 can increase power (i.e., picked-up power) picked up from the power transmitted by the wireless charging device 300.

In accordance with an implementation of the present invention, if the battery 195 needs to be charged at a high speed, both the transmission power of the wireless charging device 300 and the pick-up power of the mobile terminal 100 may be increased.

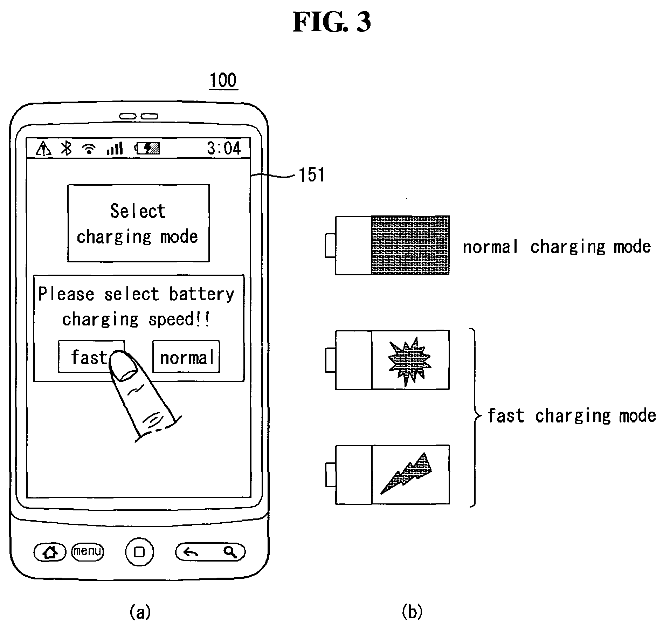

FIG. 3 shows a user interface that allows a user to select battery charging mode, provided by the mobile terminal 100. From FIG. 3(a), it can be seen that the mobile terminal 100 provides normal charging mode and fast charging mode. When a user selects fast charging mode as shown in FIG. 3(a), the mobile terminal 100 can display an indicator, indicating that fast charging is in progress, such as that shown in FIG. 3(b), in an indicator region.

As shown in FIG. 3, the fast charging of the battery 195 can be executed by a user's choice. In accordance with another implementation of the present invention, if the charging level of the battery 195 is a preset level or lower, the mobile terminal 100 may automatically charge the battery 195 in fast charging mode.

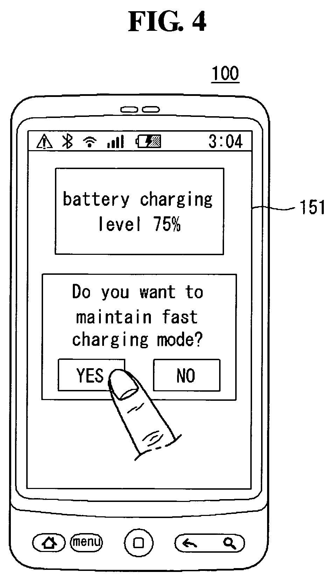

FIG. 4 shows a user interface that allows a user to change battery charging mode, provided by the mobile terminal 100 in accordance with the present invention. Referring to FIG. 4, when the charging level of the battery 195 reaches a specific level, for example, 75%, the mobile terminal 100 can determine whether or not to maintain the charging mode of the battery 195 in fast charging mode.

Meanwhile, in accordance with another implementation of the present invention, when the charging level of the battery 195 reaches a specific level, the mobile terminal 100 may automatically switch the charging mode of the battery 195 from fast charging mode to normal charging mode. This is because charging efficiency in fast charging mode may be lower than charging efficiency in normal charging mode.

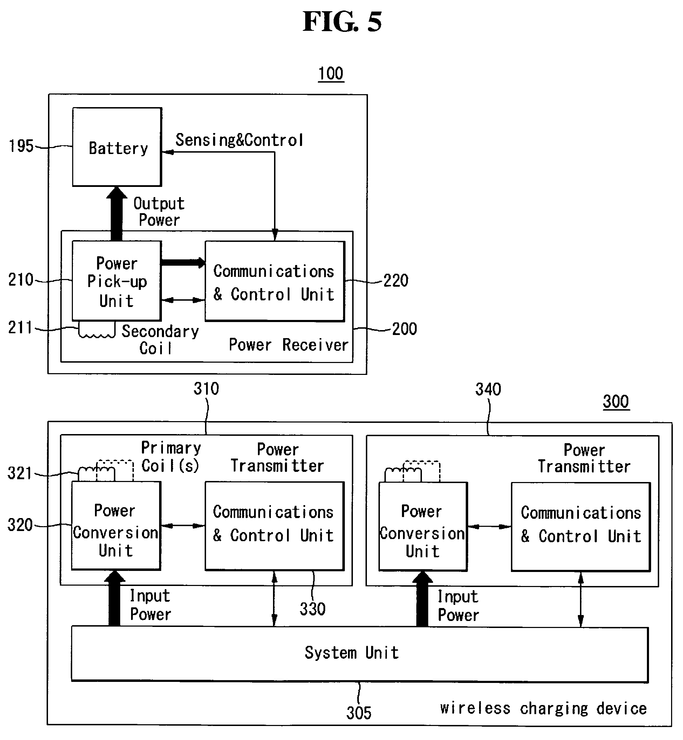

FIG. 5 shows a schematic construction of the mobile terminal 100 and the wireless charging device 300 in accordance with the present invention. Only elements necessary for a description of the charging of the battery 195, from among the elements of the mobile terminal 100 and the wireless charging device 300, are simply described with reference to FIG. 5.

The wireless charging device 300 can include a plurality of power transmitters 310 and 340 for receiving power from a system unit 305 and transmitting power to the mobile terminal 100 in accordance with a magnetic induction method based on the received power. The plurality of power transmitters 310 and 340 can be used to charge batteries included in different mobile terminals.

The plurality of power transmitters 310 and 340 can have the same or similar functions and constructions. Accordingly, the function and construction of only one power transmitter, for example, 310 are described below for simplicity. The power transmitter 310 includes a power conversion unit 320 and a communications & control unit 330. The power conversion unit 320 can send input power to the mobile terminal 100 in accordance with a magnetic induction method. The communications & control unit 330 can control the operation of the power conversion unit 320 under the control of the system unit 305 or can perform communication with the mobile terminal 100 using signals transmitted and received through the power conversion unit 320.

Meanwhile, the communications & control unit 330 can increase power transmitted to the mobile terminal 100 by changing the impedance of the power conversion unit 320 based on the charging mode of the battery 195 of the mobile terminal 100. More particularly, the communications & control unit 330 can increase power transmitted to the mobile terminal 100 by increasing the impedance of the magnetic induction coil 321 of the power conversion unit 320 in fast charging mode. The magnetic induction coil 311 corresponds to a primary coil that induces a magnetic field in accordance with a magnetic induction method.

In FIG. 5, the communications & control unit 330 of the power transmitter 310 can perform both a communication function with the mobile terminal 100 and a control function for the power transmitter 310. In accordance with another implementation of the present invention, the power transmitter 310 may include a control unit and a radio communication unit which are separated from each other. Furthermore, the control unit of the power transmitter 310 may form a part of a controller (not shown) for controlling the general operation of the wireless charging device 300.

The mobile terminal 100 can include a power receiver 200 and the battery 195. The power receiver 200 can include a power pick-up unit 210 and a communications & control unit 220. The power pick-up unit 210 can receive power transmitted by the wireless charging device 300 through a magnetic induction coil 211, generate voltage for charging the battery 195 based on the received power, and charge the battery 195 with the generated voltage.

The communications & control unit 220 can control the operation of the power pick-up unit 210, perform communication with the wireless charging device 300 using signals transmitted and received through the power pick-up unit 210, and sense the state of the battery 195 or directly control the charging operation of the battery 195.

Meanwhile, the communications & control unit 220 can increase power received by the mobile terminal 100 by changing the impedance of the power pick-up unit 210 based on the charging mode of the battery 195 of the mobile terminal 100. More particularly, the communications & control unit 220 can increase power received by the mobile terminal 100 by increasing the impedance of the magnetic induction coil 211 of the power pick-up unit 210 in fast charging mode. The magnetic induction coil 211 corresponds to a secondary coil that induces a magnetic field in accordance with a magnetic induction method.

In FIG. 5, the communications & control unit 220 of the power receiver 200 can perform both a communication function with the wireless charging device 300 and a control function for the power receiver 200. In accordance with another implementation of the present invention, the power receiver 200 may include a control unit and a radio communication unit which are separated from each other. Furthermore, the control unit of the power receiver 200 may form a part of the controller 180 for controlling the general operation of the mobile terminal 100.

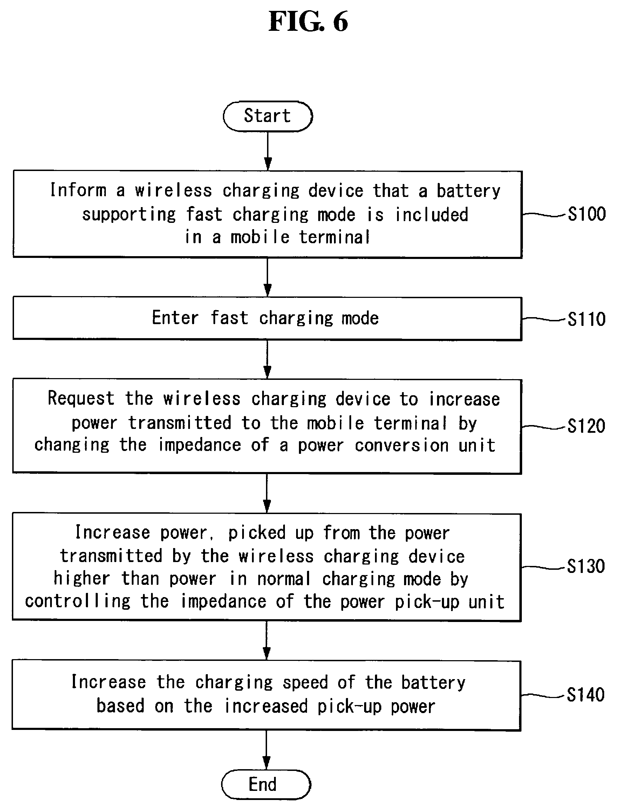

FIG. 6 is a flowchart illustrating an example of a method of charging the battery at a high speed which is performed in the mobile terminal 100 in accordance with the present invention. The method of charging the battery at a high speed is described below with reference to necessary drawings.

First, the communications & control unit 220 of the mobile terminal 100 informs the wireless charging device 300 that the battery supporting fast charging mode is included in the mobile terminal 100 at step S100. A method of using near-field wireless communication through the radio communication unit 110 or a method of using wireless communication through the power pick-up unit 210 can be used as a method of the mobile terminal 100 informing the wireless charging device 300 that it includes the battery supporting fast charging mode.

Next, the mobile terminal 100 enters fast charging mode at step S110. The mobile terminal 100 requests the wireless charging device 300 to increase power transmitted to the mobile terminal 100 by changing the impedance of the power conversion unit 320 at step S120. At the same time, the mobile terminal 100 more increases power, picked up from the power transmitted by the wireless charging device 300, than power in normal charging mode by controlling the impedance of the power pick-up unit 210 at step S130.

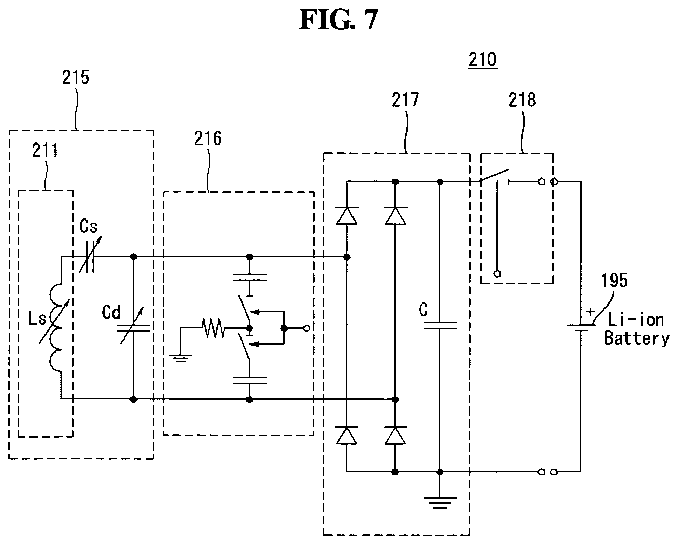

Next, the mobile terminal 100 can increase the charging speed of the battery 195 based on the increased pick-up power at step S140. For example, the communications & control unit 220 of the mobile terminal 100 can increase the charging speed of the battery 195 by increasing a charging voltage, supplied to the battery 195, based on the increased pick-up power. Examples in which the mobile terminal 100 performs fast charging mode are described in detail below with reference to FIGS. 7 to 9.

FIG. 7 is a circuit diagram showing an example of the power pick-up unit 210 of the mobile terminal 100 in accordance with the present invention. The elements of the power pick-up unit 210 shown in FIG. 7 are optional elements. In accordance with an implementation of the present invention, the power pick-up unit 210 may include one or more elements other than the elements of FIG. 7 or may not include some of the illustrated elements.

As shown in FIG. 7, the power pick-up unit 210 includes the magnetic induction coil Ls 211, capacitors Cs and Cd forming the magnetic induction coil Ls 211 and a dual resonant circuit 215, a communication modulator 216, a rectifier circuit 217, and an output disconnection unit 218.

The magnetic induction coil 211 can receive power transmitted by the wireless charging device 300 in accordance with a magnetic induction method. The capacitor Cs connected to the magnetic induction coil 211 in series functions to increase power transmission efficiency, and the capacitor Cd connected to the magnetic induction coil 211 in parallel enables a resonant detection method. The functions and operations of the magnetic induction coil 211 and the capacitors Cs and Cd are evident to a person having ordinary skill in the art to which the present invention belongs, and thus a description thereof is omitted. Furthermore, the dual resonant construction is described in detail in the specification of Qi, that is, a wireless charging standard.

From FIG. 7, it can be seen that the capacities of the magnetic induction coil 211 and the capacitors Cs and Cd are variable in the mobile terminal 100 according to the present invention. This is related to the charging mode of the battery 195 of the mobile terminal 100. For example, the communications & control unit 220 of the mobile terminal 100 can vary the capacities of the magnetic induction coil 211 and the capacitors Cs and Cd depending on the charging mode of the battery 195.

The communications & control unit 220 can increase pick-up power in such a way as to increase the amount of voltage induced by the magnetic induction coil 211 by increasing the inductance of the magnetic induction coil 211 in fast charging mode. The increased pick-up power can become a base for increasing the charging speed of the battery 195. When the inductance value of the magnetic induction coil 211 is increased, the capacitances of the capacitors Cs and Cd can also be changed according to a use.

Furthermore, the communications & control unit 220 may change the capacitances of the capacitors Cs and Cd in order to implement the fast charging of the battery 195. The capacity of the magnetic induction coil 211 can also be changed by incorporating a change of the capacitances of the capacitors Cs and Cd into the capacity of the magnetic induction coil 211.

The communication modulator 216 can modulate a primary cell current and/or a primary cell voltage in response a power signal transmitted by the wireless charging device 300. The structure, function, and operation of the communication modulator 216 are also described in detail in the specification of Qi, that is, a wireless charging standard, and thus a further description thereof is omitted.

The rectifier circuit 217 can rectify and convert an AC signal, received from the dual resonant circuit 215, into a DC signal and output the DC signal. The output disconnection unit 218 determines whether or not to connect the output terminal of the rectifier circuit 217 to the battery 195 under the control of the communications & control unit 220. For example, if sufficient power is not supplied from the wireless charging device 300, the communications & control unit 220 can maintain the open state of the output disconnection unit 218.

An example in which the fast charging method of the battery 195 shown in FIG. 6 is applied to the power pick-up unit 210 of FIG. 7 is described below. In fast charging mode, the communications & control unit 220 increases the inductance of the magnetic induction coil 211 and varies the capacitances of the capacitors Cs and Cd of the dual resonant circuit 215 by incorporating an increment of the capacity of the magnetic induction coil 211 into the capacitances. Accordingly, an AC voltage outputted from the dual resonant circuit 215 is more increased than an AC voltage in normal charging mode. As a result, a DC voltage outputted through the rectifier circuit 217 is also increased and thus a charging voltage supplied to the battery 195 is also increased, so the charging speed of the battery 195 can become fast.

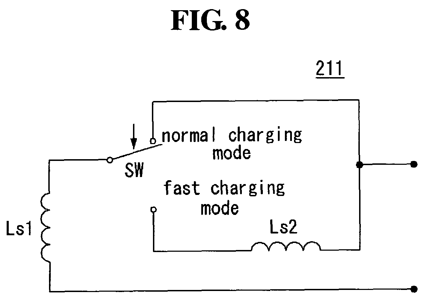

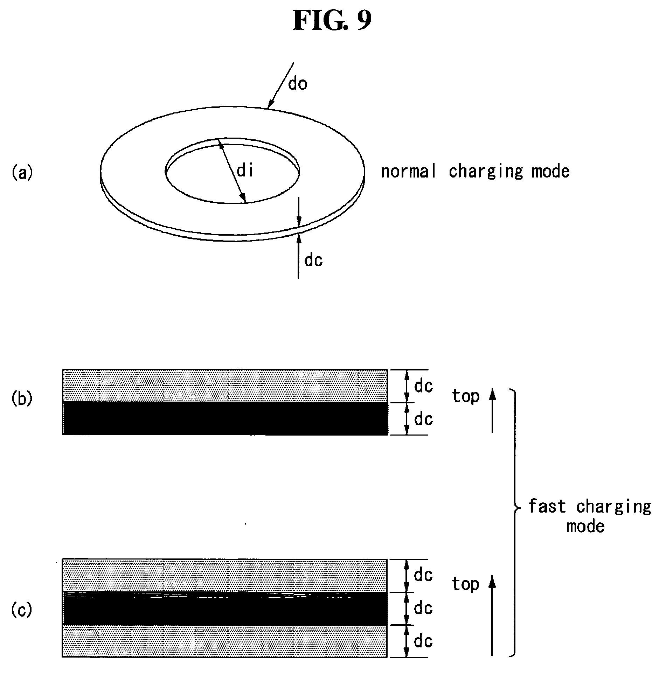

FIGS. 8 and 9 show examples in which the inductance value of the magnetic induction coil 211 is changed depending on the charging mode of the battery 195 in the mobile terminal 100 in accordance with the present invention. From FIG. 8, it can be seen that the inductance value of the magnetic induction coil 211 is determined by one coil Ls1 in normal charging mode, but the inductance value of the magnetic induction coil 211 is determined by two coils Ls1 and Ls2 coupled in series in fast charging mode.

FIG. 9(a) shows a basic coil configured to have a predetermined inside diameter di, outside diameter do, and thickness dc and determine the inductance value of the magnetic induction coil 211 in normal charging mode. FIG. 9(b) shows that two basic coils shown in FIG. 9(a) are coupled in series in a stack state in order to increase the inductance value of the magnetic induction coil 211 in a first fast charging mode. FIG. 9(c) shows that three basic coils shown in FIG. 9(a) are coupled in series in a stack state in order to increase the inductance value of the magnetic induction coil 211 in a second fast charging mode. That is, as shown in FIG. 9, the mobile terminal 100 according to the present invention may support a plurality of fast charging modes.

An example in which the inductance of the magnetic induction coil 211 of the power pick-up unit 210 of the mobile terminal 100 according to the present invention can be increased based on the serial connection of coils has been described with reference to FIGS. 7 to 9. In accordance with another embodiment of the present invention, the magnetic induction coil 211 may be implemented to have an inductance value that is consecutively changed by the manipulation of a user or under the control of the communications & control unit 220. The same principle applies to the capacitors Cs and Cd included in the dual resonant circuit 215.

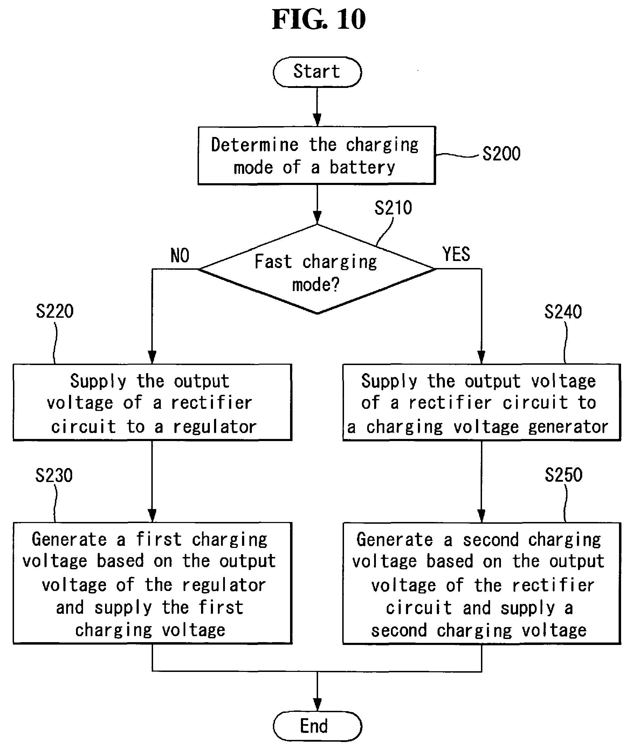

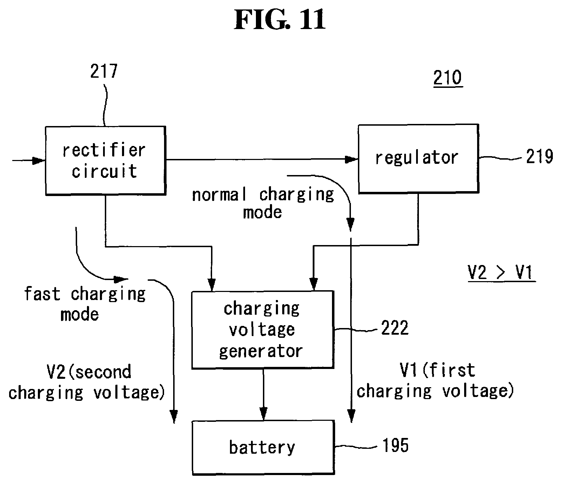

FIG. 10 is a flowchart illustrating another example of a method of charging the battery at a high speed which is performed in the mobile terminal 100 in accordance with the present invention. FIG. 11 is a block diagram of the power pick-up unit 210 of the mobile terminal 100 in accordance with the present invention, for illustrating the method shown in FIG. 10. The method of charging the battery at a high speed is described in detail with reference to necessary drawings, such as FIGS. 10 and 11.

When the battery 195 starts being charged, the communications & control unit 220 of the mobile terminal 100 determines the charging mode of the battery 195 at step S200. If, as a result of the determination, the charging mode of the battery 195 is determined to be normal charging mode at step S210, the communications & control unit 220 supplies the output voltage of the rectifier circuit 217 to a regulator 219 at step S220. In a small-sized electronic device, such as a handheld phone or a smart phone, the regulator 219 preferably is implemented using a Low Drop Output (LDO) regulator whose input/output terminals have relatively low voltage drops.

The regulator 219 outputs a specific voltage based on the output voltage of the rectifier circuit 217. In response thereto, a charging voltage generator 222 generates a first charging voltage V1 based on the output voltage of the regulator 219 and supplies the first charging voltage V1 to the battery 195 at step S230.

In contrast, if, as a result of the determination, the charging mode of the battery 195 is determined to be fast charging mode at step S210, the communications & control unit 220 directly supplies the output voltage of the rectifier circuit 217 to the charging voltage generator 222 at step S240. In response thereto, the charging voltage generator 222 generates a second charging voltage V2 based on the output voltage of the rectifier circuit 217 and supplies the second charging voltage V2 to the battery 195 at step S250.

The second charging voltage V2 is higher than the first charging voltage V1. This is because as described above, the output voltage of the rectifier circuit 217 is higher in fast charging mode than in normal charging mode and a voltage drop due to the regulator 219 is excluded. Accordingly, in fast charging mode, the battery 195 can be charged faster.

In accordance with an implementation of the present invention, the charging voltage generator 222 can be implemented using a dual input charging Integrated Circuit (IC) for generating different charging voltages based on the output voltage of the rectifier circuit 217 and the output voltage of the regulator 219 and supplying the voltages to the battery 195. In accordance with another implementation of the present invention, the power pick-up unit 210 may further include a dual input charging IC for controlling the charging of the battery 195 using different charging voltages generated from the charging voltage generator 222.

FIG. 12 is a flowchart illustrating an example of a method of charging a battery included in another electronic device at a high speed which is performed in the wireless charging device 300 in accordance with the present invention. The method of charging the battery at a high speed is described with reference to necessary drawings.

The wireless charging device 300 receives information on the charging mode of the battery from the electronic device through the radio communication unit at step S300. As described above, the electronic device can be a mobile terminal including a battery that supports both normal charging mode and fast charging mode.

The wireless charging device 300 determines the charging mode of the battery at step S310. If, as a result of the determination at step S310, the charging mode of the battery is determined to be normal charging mode, the communications & control unit 330 of the wireless charging device 300 generates a power signal in the state in which the impedance of the power conversion unit 320 has not been changed at step S320 and sends the generated power signal to the electronic device at step S330. Here, the state in which the impedance of the power conversion unit 320 has not been changed may mean that the setting state of the power conversion unit 320 set in normal charging mode is not changed.

In contrast, if, as a result of the determination at step S310, the charging mode of the battery is determined to be fast charging mode, the communications & control unit 330 of the wireless charging device 300 generates a power signal having increased transmission power by controlling the impedance of the power conversion unit 320 at step S340 and sends the generated power signal to the electronic device at step S350.

For example, the communications & control unit 330 can generate the power signal having increased transmission power in such a way as to raise voltage induced by the magnetic induction coil 321 by increasing the inductance of the magnetic induction coil 321 included in the power conversion unit 320. In this case, the communications & control unit 330 performs impedance matching for the power conversion unit 320 by incorporating an increase in the inductance of the magnetic induction coil 321 into the impedance matching.

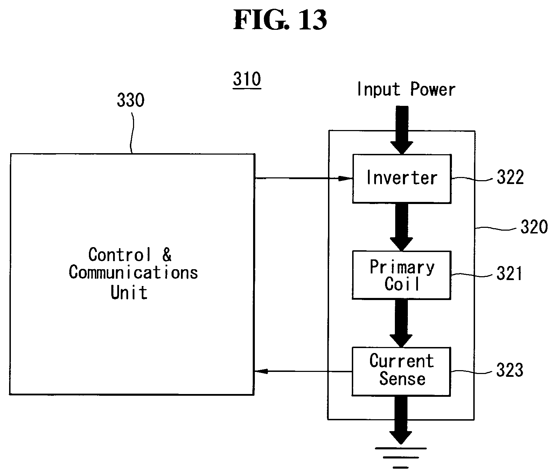

FIG. 13 is a block diagram showing an example of the power transmitter 310 of the wireless charging device 300 in accordance with the present invention. The elements of the power transmitter 310 shown in FIG. 13 are optional elements. In accordance with an implementation of the present invention, the power transmitter 310 may include one or more elements other than elements shown in FIG. 13 or may not include some of the illustrated elements.

Referring to FIG. 13, the power transmitter 310 includes the power conversion unit 320 and the communications & control unit 330. The power conversion unit 320 can generate a power signal for charging the battery of an external electronic device based on an input voltage and send the generated power signal to the electronic device in accordance with a magnetic induction method. In some implementations, the power conversion unit 320 may be used to perform wireless communication with the electronic device under the control of the communications & control unit 330, if necessary.

The power conversion unit 320 includes an inverter 322, the magnetic induction coil 321, and a current sensor 323. The inverter 322 converts a received DC signal into an AC signal and outputs the AC signal. The AC signal may be used to drive a resonant circuit including the magnetic induction coil 321.

The current sensor 323 can sense a current value that flows through the power conversion unit 320 and transfer the sensed current value to the communications & control unit 330. The communications & control unit 330 can control the operation of the power transmitter 310 based on the sensed current value.

The communications & control unit 330 may perform a wireless communication function with the electronic device through the power conversion unit 320 or may generally control the operation of the power transmitter 310. For example, if the charging mode of the battery of an electronic device is fast charging mode, the communications & control unit 330 can increase power, transferred to the electronic device through a power signal generated from the power conversion unit 320, by increasing the inductance of the magnetic induction coil 321. Here, the communications & control unit 330 can perform impedance matching for the power conversion unit 320 by incorporating an increase in the inductance of the magnetic induction coil 321 into the impedance matching.

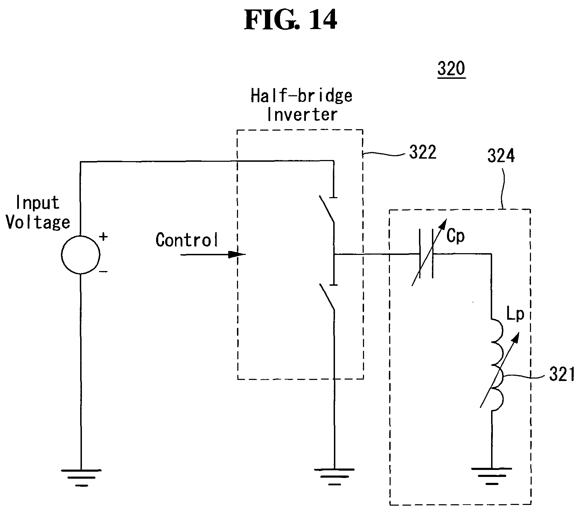

FIG. 14 is a circuit diagram showing an example of the power conversion unit 320 of the wireless charging device 300 in accordance with the present invention. The elements of the power conversion unit 320 shown in FIG. 14 are optional elements. In accordance with an implementation of the present invention, the power conversion unit 320 may include one or more elements other than the elements shown in FIG. 14 or may not include some of the illustrated elements.

Referring to FIG. 14, the power conversion unit 320 includes a half-bridge inverter 322 and a resonant circuit 324 including the magnetic induction coil 321. The resonant circuit 324 generates a power signal based on an AC signal outputted from the inverter 322 and sends the generated power signal to an electronic device.

The capacities of the magnetic induction coil 321 and the capacitor Cp of the resonant circuit 324 are variable. This is related to the charging mode of the battery of an electronic device. For example, the communications & control unit 330 may vary the capacities of the magnetic induction coil 321 and the capacitor Cp depending on the charging mode of the battery of an electronic device.

More particularly, the communications & control unit 330 can increase power transmitted to the electronic device in such a way as to increase the amount of voltage induced by the magnetic induction coil 321 by increasing the inductance of the magnetic induction coil 321 in fast charging mode. The increased transmission power can become a base for increasing the charging speed of the battery of the electronic device. When the inductance value of the magnetic induction coil 321 is increased, the capacitance of the capacitor Cp can be increased. Like in the method of charging the battery at a high speed in the mobile terminal 100 according to the present invention describe above, the inductance value of the magnetic induction coil 321 in fast charging mode can be increased stepwise or consecutively by the manipulation of a user or under the control of the communications & control unit 330.

Furthermore, the communications & control unit 330 may change the capacitance of the capacitor Cp in order to implement the fast charging of the battery of an electronic device. Here, the capacity of the magnetic induction coil 321 can also be changed by incorporating a change of the capacitance of the capacitor Cp into the capacity of the magnetic induction coil 321.

The mobile terminal according to the present invention can charge its battery at a high speed based on power received from the wireless charging device.

The wireless charging device according to the present invention can wirelessly charge the battery of an electronic device at a high speed.

The above-described methods performed in the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the claims.

## Claims

1. A mobile terminal comprising:
a battery (195) configured to be charged in a normal charging mode and to be charged in a fast charging mode;
a power pick-up unit (210) configured to receive power from a wireless charging device (300) based on magnetic induction, to provide a charging voltage based on the received power, and to supply the charging voltage to the battery; and
a control unit (220) configured to increase the power by controlling an impedance of the power pick-up unit and to increase a charging speed of the battery based on the increased power when the battery is to be charged in the fast charging mode;
**characterized in that** the power pick-up unit (210) further comprising:
a first coil (Ls1) configured to determine an inductance value in the normal charging mode; and
a second coil (Ls2) coupled in series with the first coil (Ls1) and configured to determine an inductance value in the fast charging mode.

2. The mobile terminal of claim 1, wherein the control unit (220) increases the power by increasing an inductance of the power pick-up unit when the battery is to be charged in the fast charging mode.

3. The mobile terminal of claim 2, wherein the control unit (220) increases the charging voltage of the battery based on the increased power when the battery is to be charged in the fast charging mode.

4. The mobile terminal of claim 3, wherein the power pick-up unit (210) further includes:
a rectifier circuit (217) to convert an alternating current (AC) voltage, induced from a magnetic induction coil that has the first coil and the second coil, into a direct (DC) voltage;
a regulator (219) connected to an output terminal of the rectifier circuit; and
a charging voltage generator (222) to provide a first charging voltage based on an output voltage of the regulator and to supply the first charging voltage to the battery when the battery is to be charged in the normal charging mode, and the charging voltage generator to generate a second charging voltage based on an output voltage of the rectifier circuit and to supply the second charging voltage to the battery when the battery is to be charged in the fast charging mode.

5. The mobile terminal of claim 2, wherein the power pick-up unit (210) includes a plurality of capacitors, and the control unit increases the power by increasing capacitance of the capacitors.

6. The mobile terminal of claim 1, wherein the mobile terminal communicates with the wireless charging device (300) to increase the power provided to the mobile terminal by varying an impedance of a power conversion unit in the wireless charging device.

7. The mobile terminal of claim 6, wherein the control unit (220) communicates with the wireless charging device (300) to increase the power provided to the mobile terminal by increasing an inductance of a magnetic induction coil in the power conversion unit.

8. The mobile terminal of claim 1, further comprising a display (151) to receive a touch input to change from the normal charging mode to the fast charging mode.

9. The mobile terminal of claim 1, wherein the wireless charging device comprising:
a communication unit (110) configured to receive, from an electronic device, information regarding a desired charging mode of a battery of the electronic device;
a power conversion unit (320) configured to generate a power signal for charging the battery in the electronic device based on an input voltage, and the power conversion unit (320) to provide the power signal to the electronic device based on magnetic induction; and
a control unit (330) configured to increase power provided to the electronic device by controlling an impedance of the power conversion unit when the battery is to be charged in a fast charging mode.

10. The mobile terminal of claim 9, wherein the power conversion unit (320) includes a magnetic induction coil (321), and the control unit (330) increases the power provided to the electronic device by increasing an inductance of the magnetic induction coil.

11. The mobile terminal of claim 9, wherein the power pick-up unit (210) of the electronic device receives power from the wireless charging device based on the magnetic induction, and the power pick-up unit provides a charging voltage to the battery based on the received power, and
a control unit of the electronic device increases the power by controlling an impedance of the power pick-up unit (210) and increases a charging speed of the battery when the battery is to be charged in the fast charging mode.

12. The mobile terminal of claim 1, wherein the charging mode is automatically changed based on a charging level of the battery.

## Patentansprüche

1. Mobiles Endgerät, das aufweist:
eine Batterie (195), die konfiguriert ist, um in einer normalen Ladebetriebsart geladen zu werden und in einer Schnelladebetriebsart geladen zu werden;
eine Leistungsaufnahmeeinheit (210), die konfiguriert ist, um basierend auf magnetischer Induktion Leistung von einer drahtlosen Ladevorrichtung (300) zu empfangen, um basierend auf der empfangenen Leistung eine Ladespannung bereitzustellen und um die Ladespannung an die Batterie zu liefern; und
eine Steuereinheit (220), die konfiguriert ist, um die Leistung durch Steuern einer Impedanz der Leistungsaufnahmeeinheit zu erhöhen und eine Ladegeschwindigkeit der Batterie basierend auf der erhöhten Leistung zu erhöhen, wenn die Batterie in der Schnelladebetriebsart geladen werden soll;
**dadurch gekennzeichnet, dass** die Leistungsaufnahmeeinheit (210) ferner aufweist:
eine erste Spule (Ls1), die konfiguriert ist, um einen Induktivitätswert in der normalen Ladebetriebsart zu bestimmen; und
eine zweite Spule (Ls2), die in Reihe mit der ersten Spule (Ls1) geschaltet ist und konfiguriert ist, um einen Induktivitätswert in der Schnellladebetriebsart zu bestimmen.

2. Mobiles Endgerät nach Anspruch 1, wobei die Steuereinheit (220) die Leistung durch Erhöhen einer Induktivität der Leistungsaufnahmeeinheit erhöht, wenn die Batterie in der Schnellladebetriebsart geladen werden soll.

3. Mobiles Endgerät nach Anspruch 2, wobei die Steuereinheit (220) die Ladespannung der Batterie basierend auf der erhöhten Leistung erhöht, wenn die Batterie in der Schnellladebetriebsart geladen werden soll.

4. Mobiles Endgerät nach Anspruch 3, wobei die Leistungsaufnahmeeinheit (210) ferner umfasst:
eine Gleichrichterschaltung (217) zum Umwandeln einer Wechselstrom-(AC-) Spannung, die von einer magnetischen Induktionsspule, die die erste Spule und die zweite Spule hat, induziert wird, in eine Gleich- (DC-) Spannung;
einen Regler (219), der mit einem Ausgangsanschluss der Gleichrichterschaltung verbunden ist; und
einen Ladespannungsgenerator (222), um basierend auf einer Ausgangsspannung des Reglers eine erste Ladespannung bereitzustellen und um die erste Ladespannung an die Batterie zu liefern, wenn die Batterie in der Normalladebetriebsart geladen werden soll, und wobei der Ladespannungsgenerator basierend auf einer Ausgangsspannung der Gleichrichterschaltung eine zweite Ladespannung erzeugen soll und die zweite Ladespannung an die Batterie liefern soll, wenn die Batterie in der Schnellladebetriebsart geladen werden soll.

5. Mobiles Endgerät nach Anspruch 2, wobei die Leistungsaufnahmeeinheit (210) mehrere Kondensatoren aufweist und die Steuereinheit die Leistung durch Erhöhen der Kapazität der Kondensatoren erhöht.

6. Mobiles Endgerät nach Anspruch 1, wobei das mobile Endgerät mit der drahtlosen Ladevorrichtung (300) kommuniziert, um die an das mobile Endgerät bereitgestellte Leistung durch Ändern der Impedanz einer Leistungsumwandlungseinheit in der drahtlosen Ladevorrichtung zu erhöhen.

7. Mobiles Endgerät nach Anspruch 6, wobei die Steuereinheit (220) mit der drahtlosen Ladevorrichtung (300) kommuniziert, um die an das an das mobile Endgerät bereitgestellte Leistung durch Erhöhen einer Induktivität einer magnetischen Induktionsspule in der Leistungsumwandlungseinheit zu erhöhen.

8. Mobiles Endgerät nach Anspruch 1, das ferner eine Anzeige (151) aufweist, um eine Berührungseingabe zu empfangen, um von der Normalladebetriebsart auf die Schnellladebetriebsart zu wechseln.

9. Mobiles Endgerät nach Anspruch 1, wobei die drahtlose Ladevorrichtung aufweist:
eine Kommunikationseinheit (110), die konfiguriert ist, um von einer elektronischen Vorrichtung Informationen bezüglich einer gewünschten Ladebetriebsart einer Batterie der elektronischen Vorrichtung zu empfangen;
eine Leistungsumwandlungseinheit (320), die konfiguriert ist, um basierend auf einer Eingangsspannung ein Leistungssignal zum Laden der Batterie in der elektronischen Vorrichtung zu erzeugen, und wobei die Leistungsumwandlungseinheit (320) das Leistungssignal basierend auf magnetischer Induktion an die elektronische Vorrichtung bereitstellen soll; und
eine Steuereinheit (330), die konfiguriert ist, um die an die elektronische Vorrichtung bereitgestellte Leistung durch Steuern einer Impedanz der Leistungsumwandlungseinheit zu erhöhen, wenn die Batterie in der Schnellladebetriebsart geladen werden soll.

10. Mobiles Endgerät nach Anspruch 9, wobei die Leistungsumwandlungseinheit (320) eine magnetische Induktionsspule (321) umfasst und die Steuereinheit (330) die an die elektronische Vorrichtung bereitgestellte Leistung durch Erhöhen einer Induktivität der magnetischen Induktionsspule erhöht.

11. Mobiles Endgerät nach Anspruch 9, wobei die Leistungsaufnahmeeinheit (210) der elektronischen Vorrichtung basierend auf der magnetischen Induktion Leistung von der drahtlosen Ladevorrichtung empfängt, und die Leistungsaufnahmeeinheit basierend auf der empfangenen Leistung eine Ladespannung an die Batterie bereitstellt, und
eine Steuereinheit der elektronischen Vorrichtung die Leistung durch Steuern einer Impedanz der Leistungsaufnahmeeinheit (210) erhöht und eine Ladegeschwindigkeit der Batterie erhöht, wenn die Batterie in der Schnellladebetriebsart geladen werden soll.

12. Mobiles Endgerät nach Anspruch 1, wobei die Ladebetriebsart basierend auf einem Ladestand der Batterie automatisch geändert wird.

## Revendications

1. Terminal mobile comprenant :
une batterie (195) configurée pour être chargée dans un mode de charge normale et pour être chargée dans un mode de charge rapide ;
une unité de captage de courant (210) configurée pour recevoir du courant d'un dispositif de charge sans fil (300) basé sur une induction magnétique, pour fournir une tension de charge basée sur le courant reçu et pour amener la tension de charge à la batterie ; et
une unité de commande (220) configurée pour augmenter le courant par la commande d'une impédance de l'unité de captage de courant et pour augmenter une vitesse de charge de la batterie basée sur le courant augmenté lorsque la batterie doit être chargée dans le mode de charge rapide ;
**caractérisé en ce que** l'unité de captage de courant (210) comprend en outre :
une première bobine (Ls1) configurée pour déterminer une valeur d'inductance dans le mode charge normale ; et
une seconde bobine (Ls2) couplée en série avec la première bobine (Ls1 et configurée pour déterminer une valeur d'inductance dans le mode de charge rapide.

2. Terminal mobile selon la revendication 1, dans lequel l'unité de commande (220) augmente le courant par augmentation d'une inductance de l'unité de captage de courant lorsque la batterie doit être chargée dans le mode de charge rapide.

3. Terminal mobile selon la revendication 2, dans lequel l'unité de commande (220) augmente la tension de charge de la batterie basée sur le courant augmenté lorsque la batterie doit être chargée dans le mode de charge rapide.

4. Terminal mobile selon la revendication 3, dans lequel l'unité de captage de courant (210) comporte en outre :
un circuit de rectification (217) pour convertir une tension de courant alternatif (CA) induite par une bobine d'induction magnétique qui présente la première bobine et la seconde bobine, en une tension continue (CC) ;
un régulateur (219) relié à un terminal de sortie du circuit de rectification ; et
un générateur de tension de charge (222) pour fournir une première tension de charge basée sur une tension de sortie du régulateur et pour fournir la première tension de charge à la batterie lorsque la batterie doit être chargée dans le mode de charge normale, et le générateur de tension de charge pour générer une seconde tension de charge basée sur une tension de sortie du circuit de rectification et pour fournir la seconde tension de charge à la batterie lorsque la batterie doit être chargée dans le mode charge rapide.

5. Terminal mobile selon la revendication 2, dans lequel l'unité de captage de courant (210) comporte une pluralité de capaciteurs et l'unité de commande augmente le courant par augmentation de la capacitance des capaciteurs.

6. Terminal mobile selon la revendication 1, dans lequel le terminal mobile communique avec le dispositif de charge sans fil (300) pour augmenter la puissance fournie au terminal mobile par la variation d'une impédance d'une unité de conversion de puissance dans le dispositif de charge sans fil.

7. Terminal mobile selon la revendication 6, dans lequel l'unité de commande (220) communique avec le dispositif de charge sans fil (300) pour augmenter la puissance fournie au terminal mobile par augmentation d'une inductance d'une bobine d'induction magnétique dans l'unité de conversion de courant.

8. Terminal mobile selon la revendication 1, comprenant en outre un affichage (151) pour recevoir une entrée tactile pour passer du mode de charge normale au mode de charge rapide.

9. Terminal mobile selon la revendication 1, dans lequel le dispositif de charge sans fil comprend :
une unité de communication (110) configurée pour recevoir d'un dispositif électronique des informations concernant un mode de charge souhaité d'une batterie du dispositif électronique ;
une unité de conversion de courant (320) configurée pour générer un signal de courant pour la charge de la batterie dans le dispositif électronique basé sur une tension d'entrée, et l'unité de conversion de courant (320) pour fournir le signal de courant au dispositif électronique basé sur l'induction magnétique ; et
une unité de commande (330) configurée pour augmenter le courant fourni au dispositif électronique par commande d'une impédance de l'unité de conversion de courant lorsque la batterie doit être chargée dans un mode de charge rapide.

10. Terminal mobile selon la revendication 9, dans lequel l'unité de conversion de courant (320) comporte une bobine d'induction magnétique (321), et l'unité de commande (330) augmente le courant fourni au dispositif électronique par augmentation d'une inductance de la bobine d'induction magnétique.

11. Terminal mobile selon la revendication 9, dans lequel l'unité de captage de courant (210) du dispositif électronique reçoit du courant du dispositif de charge sans fil basé sur l'induction magnétique et l'unité de captage de courant fournit une tension de charge à la batterie basée sur le courant reçu ; et
une unité de commande du dispositif électronique augmente le courant par commande d'une impédance de l'unité de captage de courant (210) et augmente une vitesse de charge de la batterie lorsque la batterie doit être chargée dans le mode de charge rapide.

12. Terminal mobile selon la revendication 1, dans lequel le mode de charge est automatiquement changé sur la base d'un niveau de charge de la batterie.
